# EUROPÄISCHE PATENTANMELDUNG

(11) **EP 2 772 896 A2**
(43) Veröffentlichungstag der Anmeldung: **03.09.2014**
(21) Anmeldenummer: 14000631.3
(22) Anmeldetag: 22.02.2014
(51) Int. Cl.: G09B 9/00

(54) **Verfahren und Vorrichtung zum Lehren des Steuerns eines fernsteuerbaren Modellgeräts, wie eines Fluggeräts**

(30) Priorität: 27.02.2013 DE 102013003245
(71) Anmelder: Zajonc, Patrick, 76684 Östringen (DE)
(72) Erfinder: Zajonc, Patrick, 76684 Östringen (DE)
(74) Vertreter: Lempert, Jost

(57) **Zusammenfassung**

Die Erfindung betrifft ein Verfahren zum Lehren des Steuerns eines fernsteuerbaren Modellgeräts (RC-Modell), wie eines Modellfluggeräts, mittels eines mindestens ein Bedienungselement, aufweisenden Lehrgeräts, bei dem Steuerbefehle zur Steuerung der Bewegung des Modellgeräts von dem Lehrgerät empfangen werden und an Aktoren (Stellglieder) für mindestens ein Bedienungselement eines Lehrgeräts eines Lernenden übertragen werden, die Aktoren (Stellglieder) das mindestens eine Bedienungselement des Lehrgeräts bewegen und eine der Bewegung der des mindestens einen Bedienungselements zugeordneten Bewegung des Modellgeräts visuell gezeigt wird sowie eine Vorrichtung zum Lehren des Steuerns eines fernsteuerbaren Modellgeräts (RC-Modell) mit mindestens einem beweglichen Bedienungselement, vorzugsweise als angreifbarer Stift, das mit jeweils mindestens einem Aktoren versehen ist, der durch Steuerbefehle zur Steuerung des Modellgeräts ebenfalls gleichzeitig zur Ansteuerung von Bewegungen des Bedienungselements ansteuerbar ist, wobei die Bewegungen des Bedienungselements identisch denen sind, die zur entsprechenden Steuerung des Modellgeräts von Hand am Bedienungselement eines Steuergeräts für das Modellgerät auszuführen sind.

## Beschreibung

Die Erfindung betrifft ein Verfahren zum Lehren des Steuerns eines fernsteuerbaren Modellgeräts (RC-Modell), wie eines Modellfluggeräts, sowie eine Vorrichtung zum Lehren des Steuerns eines fernsteuerbaren Modellgeräts (RC-Modell).

Als Modellgerät im Sinne der Erfindung werden RC-Modelle verstanden, also durch Fernsteuerung bewegte Boden-, Wasser- und Luftfahrzeuge, wie beispielsweise Modellflugzeuge oder Modell-Hubschrauber. Während bei boden- und wassergebundenen Modellgeräten das Lernen der Fernsteuerung derselben in der Regel unkritisch ist, können insbesondere Fluggeräte einerseits sehr teuer sein und andererseits besteht, wenn ein Benutzer keine Erfahrung besitzt, die Gefahr, dass durch falsche Steuerbewegungen ein solches Fluggerät abstützt und beschädigt oder zerstört wird, wodurch sich erhebliche Reparaturkosten ergeben.

Zum Lernen existieren bisher lediglich druckschriftliche Anweisungen oder Lehrbücher. Der Erfindung liegt die Aufgabe zugrunde, ein Verfahren anzugeben, mit dem ein intuitives Lehren des Steuerns eines solchen Modellgeräts für einen Anfänger und damit ein intuitives Lernen durch einen Anfänger möglich ist. Weiterhin liegt der Erfindung die Aufgabe zugrunde, eine Vorrichtung zu schaffen, mittels derer ein solches intuitives Lernen ermöglicht wird.

Erfindungsgemäß wird die genannte Aufgabe bei einem Verfahren der eingangs genannten Art dadurch gelöst, Steuerbefehle zur Steuerung der Bewegung des Modellgeräts von dem Lehrgerät empfangen werden und an Aktoren (Stellglieder) für mindestens ein Bedienungselement eines Lehrgeräts eines Lernenden übertragen werden, die Aktoren (Stellglieder) das mindestens eine Bedienungselement des Lehrgeräts bewegen und eine der Bewegung der des mindestens einen Bedienungselements zugeordneten Bewegung des Modellgeräts visuell gezeigt wird.

Zur Lösung der genannten Aufgabe sieht die Erfindung weiterhin eine Vorrichtung, mit mindestens einem beweglichen Bedienungselement vor, vorzugsweise als angreifbarer Stift, das mit jeweils mindestens einem Aktoren versehen ist, der durch Steuerbefehle zur Steuerung des Modellgeräts ebenfalls gleichzeitig zur Ansteuerung von Bewegungen des Bedienungselements ansteuerbar ist, wobei die Bewegungen des Bedienungselements identisch denen sind, die zur entsprechenden Steuerung des Modellgeräts von Hand am Bedienungselement eines Steuergeräts für das Modellgerät (2) auszuführen sind.

Die Erfindung sieht also eine Vorrichtung mit durch Aktoren (Stellglieder) und damit indirekt durch letztere antreibenden Stellantriebe bewegten Bedienungselementen vor, an denen ein Lernender mit seinen Fingern angreifen kann und auf die über die Stellantriebe automatisch die Bewegungen der Bedienungselemente erzeugt werden, die denen entsprechen, mittels derer ein Modellobjekt in verschiedensten Bewegungen desselben gesteuert werden kann, so dass der Lernende an den Bedienungselementen intuitiv haptisch die entsprechenden Steuerbewegungen erfassen und damit lernen kann.

Die Erfindung sieht dabei insbesondere vor, dass die Bewegung des Modellgeräts auf einem Bildschirm wiedergegeben wird und/oder dass die Steuerbefehle zur Steuerung der Bewegung des Modellgeräts und einem Rechner aus einem Speicher des Rechners abgerufen und an das Lehrgerät übertragen werden. Es werden bei dieser Ausgestaltung gespeicherte Steuerdaten (die im Folgenden präzisiert werden) abgerufen und an die Aktoren der Bedienungselemente zur Bewegung derselben übertragen und insbesondere gleichzeitig in Form eines Videos das Modellgerät mit seinen zugehörigen Bewegungen auf einem Bildschirm gezeigt. Die Steuerung erfolgt durch einen Rechner, wie durch einen Universalrechner, in Form eines Personalcomputers in jedweder bekannten Ausbildung (stationär, portable als Notebook oder als Tablet) zudem mit ihm gezeigten und von ihm visuell erfassten Bewegungen des Modellgeräts.

In bevorzugter Ausgestaltung des erfindungsgemäßen Verfahrens ist dabei weiterhin vorgesehen, dass die Steuerbefehle mit zugehörigen Bild- oder Videodaten der Bewegungen des Modellgeräts synchronisiert werden, die den Steuerdaten entsprechen, so dass eine die Videoaufnahme der Bewegung des Modellgeräts gleichzeitig mit Ansteuerung der Aktoren des mindestens einen Bedienungselements auf einem Bildschirm wiedergegeben werden. Hierdurch wird erreicht, dass der Lernende die auf seine an den Bedienungselementen angreifenden Finger durch die Bedienungselemente ausgeübten Bewegungen den von ihm optisch erfassten Bewegungen des Modellgeräts auf einem Bildschirm intuitiv zuordnen kann.

In weiterer bevorzugter Ausgestaltung des erfindungsgemäßen Verfahrens ist vorgesehen, dass aus einer Datei, insbesondere einer Containerdatei, eines Rechners die Bewegungen des Modellgeräts zeigende Videodaten zu einem Bildschirm und synchron mit diesen aus der gleichen Datei Steuerdaten zum Steuergerät übertragen werden, wobei insbesondere die Steuerdaten aus der Audiodatei der neben dieser eine Bilddatei enthaltenen Ablaufdatei vom Audioausgang eines Rechners über einen A/D-Wandler zum Lehrgerät übertragen werden, oder aber die Steuerdaten aus einer Bild- und Steuerdaten enthaltenen Containerdatei als digitale von einem Rechner an das Lehrgerät übertragen werden. Weitere bevorzugte erfindungsgemäße Ausgestaltungen des Verfahrens sehen vor, dass die Übertragung über USB-Schnittstellen erfolgt, wobei insbesondere als gemultiplextes PPM-Summensignal vorliegende Steuersignale zur Übertragung auf das Lehrgerät zu PWM-Signalen de-multiplext werden. Die übertragenen PWM-Werte werden vom empfangenden Mikrocontroller direkt an die zugehörigen Stellantriebe weitergeleitet.

Die Bewegungsbefehle für die einzelnen Stellantriebe werden demgemäß aus den gespeicherten Steuerdaten in PWM-Signale dekodiert bzw. de-multiplext und durch diese PWM-Signale die Stellantriebe angesteuert.

Zur Erstellung eines derartigen Lehrvideos, wie es in der vorstehend beschriebenen Weise zum Lernen eingesetzt wird, mit zugeordneten Steuerdaten zur Steuerung und Bewegung der Bedienungselemente sieht die Erfindung in bevorzugter Ausgestaltung weiterhin vor, dass vorab die Bewegungen eines durch ein Steuergerät gesteuerten Modellgeräts mittels einer Videokamera aufgenommen werden und gleichzeitig die Bewegung bewirkenden Steuersignale über den Audioeingang der Videokamera synchron mit den aufgenommenen Videodaten aufgenommen werden.

Dabei kann in Weiterbildung vorgesehen sein, dass die der Steuerung eines Modellgeräts durch ein Steuergerät ausgesendeten Steuerbefehle über einen Multiplexer der Videokamera als PPM-Summensignal gemultiplext zugeführt werden.

In weiteren bevorzugten Ausgestaltungen ist dabei vorgesehen, dass das Summensignal zur Übertragung auf den Audio-eingang der Videokamera spannungsreduziert wird, wie beispielsweise von ca. 5,4 Volt auf 3,3 Volt und/oder dass Neutralstellung und Maximalausschläge der Steuerbefehle als Neutralsignal und Maximalsignale erfasst werden.

Beim Betrieb eines RC-Modells muss dies auf die Steueranlage eingestellt werden. Dabei spielt die Mittelstellung der Stellantriebe eine große Rolle. Bei Helikoptern kann über sie z.B. der Anstellwinkel der Rotorblätter eingestellt werden. Bei Flächenmodellen ist es z.B. der Anstellwinkel des Höheruders.

Diese Einstellungen sind bei jedem Modell unterschiedlich und hängen von mehreren Faktoren ab. Die Mittelstellung für die Stellmotoren wird in Mikrosekunden angegeben und liegt normalerweise bei 1500. Um die oben beschriebene Neutralstellung von Rotorblättern oder Rudern zu bekommen, muss die Mittelstellung der Stellmotoren nach oben oder unten korrigiert werden. Dieser Vorgang nennt sich "Trimmen". Der getrimmte Wert muss für die Trainingsvideos für die einzelnen Stellmotoren mit übernommen bzw. berechnet werden, sonst würden die Bedienungselemente falsche Werte darstellen.

Ähnlich wie bei der Neutralstellung können auch die maximal benötigten Ausschläge der Stellmotoren (sowohl im RC-Modell, als auch im Trainings- oder Lehrgerät) abweichen. Auch die maximalen Ausschläge werden in Mikrosekunden angegeben. Diese bewegen sich im Bereich von ca. 950 bis 2050 Mikrosekunden. Geht man von einem Mittelwert von ca. 1500 Mikrosekunden aus, bleiben einem in beide Richtungen ca. 500 Mikrosekunden, um den Stellwinkel des Stellantriebs anzugeben. Nun kann es z.B. durch den Einsatz von Umlenkhebeln etc. dazu kommen, dass der maximal benötigte Ausschlag eines Ruders oder eines Rotorblattes schon beim halben Weg erreicht ist. In diesem Fall müssen die maximalen Ausschläge begrenzt werden, um ein Übersteuern oder ein mechanisches Anlaufen der Teile zu verhindern. Je nach Aufbau einer Trainingsanlage und der dort verwendeten Stellantriebe kann der Mittelwert und der maximale Ausschlag abweichen und kann deshalb frei eingestellt werden.

Darüber hinaus kann alternativ vorgesehen sein, dass aus ein oder mehreren Videoaufnahmen in üblicher Schnitttechnik ein oder mehrere Lehrvideos erstellt werden oder dass als Audiodatei vorliegende Steuerdaten separat digitalisiert, Videodaten und zugehörende Steuerdaten mit Synchronisationspunkten (Timestamp) versehen werden und gemeinsam in einer Containerdatei abgespeichert werden, wobei dann insbesondere in der Containerdatei auch Neutral- und Maximalwerte abgespeichert werden.

In einer Weiterbildung der erfindungsgemäßen Vorrichtung ist vorgesehen, dass ein Speicher zum Speichern der Steuerbefehle in Form einer Steuerdatei und zum Abrufen der Steuerbefehle und zur Ansteuerung des mindestens einen Bedienungselements und weiterhin insbesondere ein Bildschirm zur mit den entsprechenden durch die Steuerbefehle bewirkten Bewegungen des mindestens einen Bedienungselements synchroner Anzeige zugehöriger Bewegungen des Modellgeräts auf dem Bildschirm vorgesehen ist. Weiterhin kann ein Steuergerät für ein Modellgerät vorgesehen sein, das zusätzlich zu dem mindestens einem Bedienungselement zugeordneten Bewegungssensor zum Abnehmen der Bewegungen des mindestens einen Bewegungselements und umsetzen der Bewegungen in elektrische Steuersignale auch Stellantriebe zum automatischen Bewegen der Bewegungselemente aufgrund von Steuersignalen aufweist. Hierdurch wird es möglich, kein separates Lehrgerät der Ansteuerungsbewegungen für Bedienungselemente eines solchen Lehrgeräts zwecks Bewirkung der entsprechenden Bewegungen des Modellobjekts vorzuhalten, sondern das eigentliche Steuergerät oder die Fernbedienung für das Modellgerät kann auch als Lehrgerät dienen, indem in dem Steuergerät eben die zum Lernen erforderlichen Stellantriebe für die Bedienungselemente mit integriert werden und durch entsprechende Steuerbefehle auf die Bedienungselemente automatisch einwirken können, so dass diese automatisch bewegt werden und die entsprechende Bewegung in der beschriebenen Weise praktisch von einem Lernenden, der die Bedienungselemente mit seinen Fingern berührt, erfasst und den von ihm gesehenen Bewegungen des eigentlichen Modellgeräts zugeordnet werden können, um so die Steuerung des letzteren hinsichtlich verschiedener Bewegungsformationen intuitiv zu lernen.

Weitere Vorteile und Merkmale der Erfindung ergeben sich aus den Ansprüchen und aus der nachfolgenden Beschreibung, bevorzugte Ausführungsbeispiele der Erfindung unter Bezugnahme auf die Zeichnungen im Einzelnen erläutert sind. Dabei zeigt:
- Fig. 1a: eine schematische Darstellung zur Erläuterung der Erstellung eines Lehrvideos;
- Fig. 1b: ein Blockdiagramm der wesentlichen Komponenten zur Umwandlung und Speicherung der Steuerbefehle bei Erstellung eines Lehrvideos;
- Fig. 1c: ein Ablaufdiagramm der Verfahrensschritte zur Aufnahme eines Lehrvideos;
- Fig. 2a: eine schematische Darstellung einer ^nmersten Ausführungsform zur Wiedergabe eines Lehrvideos;
- Fig. 2b: ein Blockdiagramm der ersten Ausführungsform der Fig. 2a;
- Fig. 3a: eine Darstellung des Steuersignals eines aufgenommenen Lehrvideos;
- Fig. 3b: eine Schaltung zur Erzeugung von Binärsignalen aus dem Signal der Fig.3a;
- Fig. 3c: ein Ablaufdiagramm der Verfahrensschritte einer ersten Ausführung des Verfahrens zur Wiedergabe eines Lehrvideos;
- Fig. 4: ein Ablaufdiagramm zum Erstellen einer Containerdatei für die Wiedergabe eines Lehrvideos gemäß der zweiten Ausführungsform zur Wiedergabe eines Lehrvideos;
- Fig. 5a: eine schematische Darstellung einer zweiten Ausführungsform zur Wiedergabe eines Lehrvideos; und
- Fig. 5b: ein Blockdiagramm zur zweiten Ausführungsform;
- Fig. 5c: ein Ablaufdiagramm der zweiten Ausführungsform der Wiedergabe eines Lehrvideos; und
- Fig. 6: eine schematische Darstellung zu einem Steuerstift mit zugeordneten Sensoren und Stellmotoren.

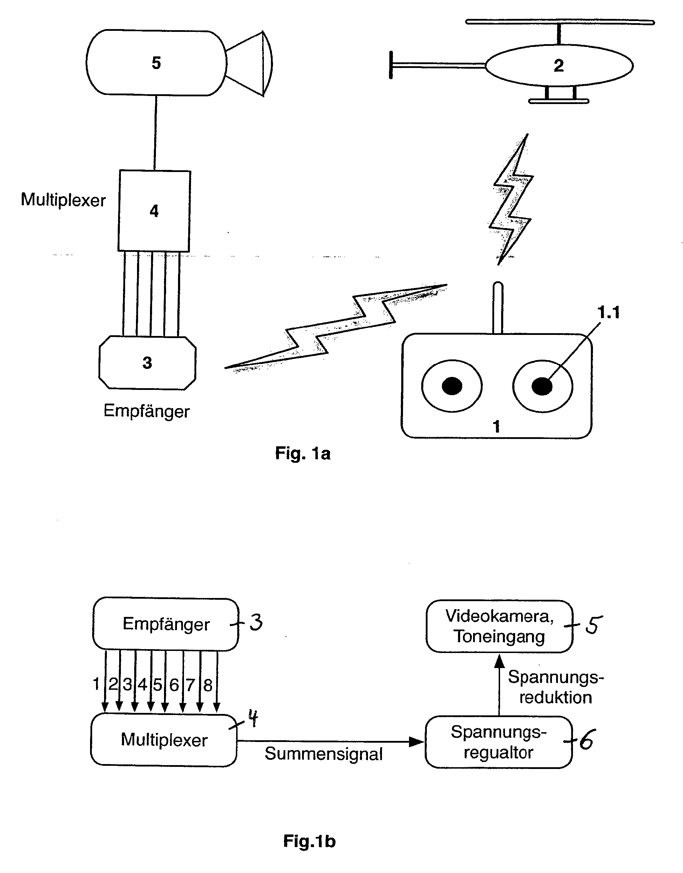

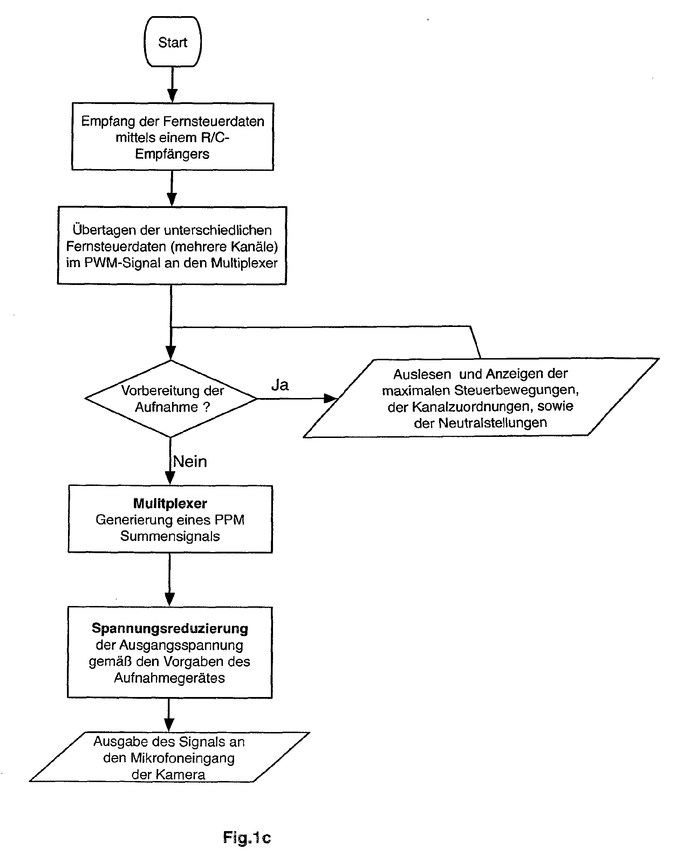

Die Fig. 1 zeigt ein Steuergerät 1 mit Bedienungselementen 1.1, insbesondere in Form von Steuerstiften, mit dem ein Modellgerät 2, wie ein Fluggerät, hier ein Helikopter, in seinen Bewegungen - hier Flugbewegungen - gesteuert werden kann. Als weitere Modellgeräte im Rahmen der Erfindung können auch andere ansteuerbare Modelle (RC-Modelle), wie bodengebundene Fahrzeuge, Schiffe und andere Fluggeräte, wie Flugzeuge etc. vorgesehen sein.

Weiterhin ist ein Empfänger 3 vorgesehen, der ebenso wie das Modellgerät 2 die drahtlos vom Steuergerät 1 ausgesandten Steuersignale für Modellgerät 2 empfängt. Dem Empfänger 3 ist ein Multiplexer 4 nachgeordnet, dessen Ausgang mit dem Audio-Eingang einer Videokamera 5 verbunden ist. Vorzugsweise ist zwischen Multiplexer 4 und Videokamera 5 noch ein Spannungsregulator 6 vorgesehen, mit dem die Ausgangsspannung des Videoplexers von ca. 5,4 Volt auf eine übliche Audio-Eingangsspannung von ca. 0,3 Volt reduziert wird.

Hiermit kann ein Lehr- oder Trainingsvideo erstellt werden, das später zum Lehren oder Trainieren eines Anfängers, der das Steuern derartiger Modellgeräte, wie eines Helikopters, lernen will.

Bei fernsteuerbaren Fluggeräten (RC-Modellen) werden die Steuerbewegungen mittels der des Steuergeräts 1 an das Modellgerät 2 drahtlos gesendet. Dort werden die Steuersignale von einem Empfänger aufgenommen, einzelnen Steuerkanälen zugeordnet, die mit Stellantrieben des Modellgeräts, wie bei einem Helikopter, für Haupt- und Steuerrotor verbunden sind und diese ansteuern, indem die Stellmotoren mittels einer Impulssteuerung die vom Sender übermittelten Positionen einnehmen und hierdurch die Bewegung des Modellgeräts steuern.

Im Rahmen der Erfindung wird bei einer derart mittels des Steuergeräts 1 gesteuerten Bewegung des Modellgeräts 2 durch die Videokamera 5 die Flugbewegung des Modellgeräts 2 aufgenommen. Gleichzeitig empfängt der Empfänger 3 die vom Steuergerät 1 ausgesandten Steuerbefehle und führt diese einem Multiplexer 4 zu, der aus den Signalen der eingehenden Steuerkanäle (hier Kanäle 1 bis 8) ein normiertes PulsPausen-Modulations-Signal oder PPM-Summensignal erzeugt. Dies wird auch als differentielle Phasenmodulation bezeichnet. Dieses Signal wird im Spannungsregulator von der Eingangsspannung von ca. 5,4 Volt auf die Mikrofon- oder Audioeingangsspannung der Videokamera 5 von ca. 0,3 Volt reduziert. In der Videokamera wird dieses die Steuerbefehle repräsentierende Audiodatei der Videodatei aufgezeichnet.

Es ist weiterhin sinnvoll, die Neutralstellung sowie die maximalen Ausschläge der Bedienungselemente 1.1 und damit die entsprechenden Werte der jeweiligen Steuerkanäle zu erfassen und abzuspeichern, um später bei der Wiedergabe eine richtige Einstellung zu erreichen.

In der vorstehend beschriebenen Weise erhält man Videomaterial in Form einer ersten Container-Datei, das neben dem eigentlichen Film (Bilddatei) als Audiodatei die mit den Videodaten synchronisierten Steuerdaten zum jeweiligen Zeitpunkt enthält.

Die derart erstellte Ablaufdatei kann in üblicher Weise mit einem Schnittprogramm zu einem oder mehreren Trainings- oder Lehrvideos bearbeitet werden, wobei die Synchronizität, Bilddaten und Steuerdaten erhalten bleiben.

Die Aufzeichnung und Aufbereitung der Daten erfolgt im Ablaufdiagramm der in Fig. 1c dargestellten Weise. Nach dem Start der durch die Bewegung der Stifte 1.1 erzeugten Steuerdaten mittels eines R/C-Empfängers 3. Die Steuerdaten werden über mehrere Kanäle als PWM-Signal an einen Multiplexer 4 übertragen. Dabei erfolgt zunächst eine Abfrage, ob die Aufnahme sich noch in der Vorbereitungsphase befindet, bei der ein Auslesen und Anzeigen der maximalen Steuerbewegungen, der zur Kanalzuordnung sowie der Neutralstellungen erfolgt. Nach Auslesen und Speichern dieser Art Information ist die Aufnahme beendet und die eigentliche Aufnahme erfolgt. Dabei werden aus den Daten durch den Multiplexer 4 ein PPM-Summensignal generiert. Es erfolgt die schon genannte Spannungsreduzierung der Ausgangsspannung gemäß Vorgaben des Aufnahmegeräts. Anschließend erfolgt die Ausgabe des (Summen-)Signals an den Mikrofoneingang der Kamera 5 (Fig. 1a).

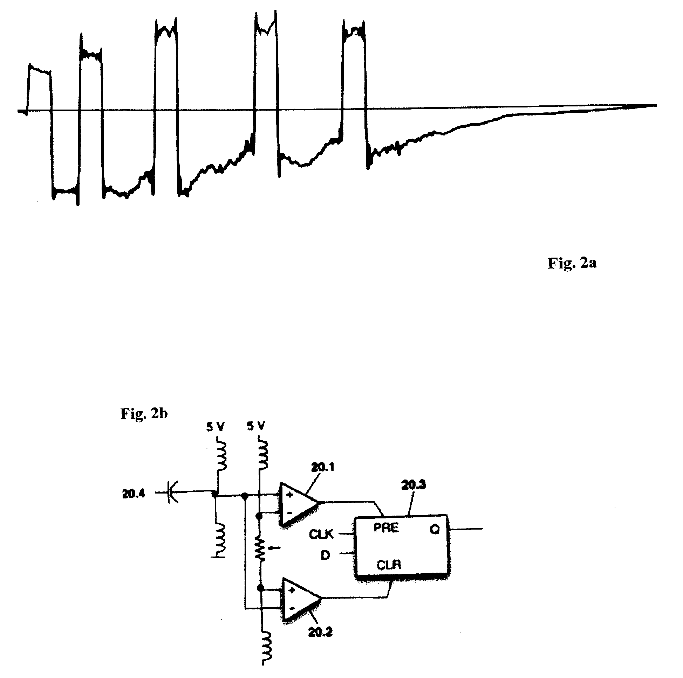

Die aufgenommenen Steuerdaten liegen in der Ton- oder Audiodatei als ein mehr oder minder verrauschtes digitales Signal entsprechend der Darstellung der Fig. 2a vor. Zur Nutzung als Stelldaten für die Stellmotoren des Lehrgerätes müssen diese Daten in reine Binärdaten umgewandelt werden. Dies geschieht durch eine Schaltung gemäß der Fig. 2b. Diese weist zwei Vergleicher 20.1, 20.2 und einen Flip-Flop 20.3 auf. Liegt über einen Eingang 20.4 eingehender Spannungspegel oberhalb eines vorgegebenen Spannungspegels, so erzeugt der Flip-Flop 20.3 über den Vergleicher 20.1 eine binäre "1", während, wenn der Spannungseingang 20.4 unterhalb eines niedrigeren Vergleichswerts liegt, der Flip-Flop 20.3 über den Vergleicher 20.2 eine binäre "0" erzeugt.

Zum Unterrichten oder Lehren eines Anfängers in der Steuerung eines Modellgeräts, wie Helikopters, ist in einer ersten Ausführungsform erfindungsgemäß folgendes vorgesehen:
Es ist ein Rechner 7 mit einem Speicher (Normspeicher) vorgesehen, wobei die Steuer- und Videodatei wie sie dort, einschließlich ihrer Aufnahme, beschrieben wurden, im Speicher gespeichert sind. Zum Lehren des Steuerns des Modellgeräts wird auf dem Rechner 7 die gemäß der vorstehenden Beschreibung erstellten Video- und Steuerdaten enthaltende Ablaufdatei abgespielt wird. Es ist ein Bildschirm 8 vorgesehen, auf dem Video- oder Bilddaten wiedergegeben werden. Mit dem Rechner 7 ist über einen A/D-Wandler 9 ein Mikrocontroller 10 mit Splitter verbunden, die das de-multiplexte PPM-Summensignal, wie es entsprechend der obigen Beschreibung bei der Aufnahme erstellt wurde, einem Trainings- oder Lehrgerät 11 zuführen, wobei der Mikrocontroller 10 im Lehrgerät 11 integriert sein kann.

Das Lehrgerät 11 weist ebenso wie das Steuergerät 1 Bedienungselemente 1.1 auf, denen im Steuergerät 11 Stellantriebe 11.1 zugeordnet sind, mit denen die Bedienungselemente 1.1 durch Steuerbefehle bewegt werden können. Das vom Audioausgang des Rechners 7 ausgegebene PPM-Summensignal muss zur Ansteuerung der Stellantriebe 11.1, die Servomotoren sind, zunächst durch den A/D-Wandler 9 in ein binäres digitales Signal gewandelt werden. Der Mikrocontroller selbst de-multiplext das derart entstandene digitale Summensignal in PWM-Signale, die den einzelnen Stellantrieben 11.1 zugeführt werden.

Derart werden beim Abspielen des Lehrvideos mit den Flugbewegungen des Modellgeräts die Bedienungselemente 1.1 (Steuerstifte) der Lehreinheit 11 in Bewegungen versetzt, die den von Hand ausgeführten Steuerbewegungen der Bedienungselemente 1.1 des Steuergeräts 1 entsprechen, die zu den entsprechenden Flugbewegungen des Modellgeräts 2 geführt haben. Ein Lernender hält seine Finger an die Bedienungselemente 1.1 des Lehrgeräts 11 und kann damit intuitiv die Bewegungen der Bedienungselemente 1.1 unter Betrachtung der Bewegungen des Modellgeräts auf dem Bildschirm erfassen, wodurch ihm intuitiv eine Zuordnung der Steuerbewegungen der Bewegungselemente 1.1 und die zugehörigen Flugbewegungen des Modellgeräts vermittelt wird, bei sich auf den Boden oder auf dem Wasser bewegenden Modellgeräten, wie Modellautos oder Modellschiffen, können die vom Rechner 7 ausgegebenen Steuerbefehle auch nach De-Multiplexen im Mikrocontroller 10 über einen Sender parallel zur Übergabe an das Lehrgerät 11 zu einem entsprechenden Modellgerät 2 drahtlos gesendet werden, so dass der Lernende nicht ein Video betrachten muss, sondern direkt das originale Modellgerät und dessen automatisch derart bewirkte Bewegungen betrachten und den ihm sensorisch auf seine Finger übertragenen Bewegungen der Bedienungselemente 1.1 zuordnen kann.

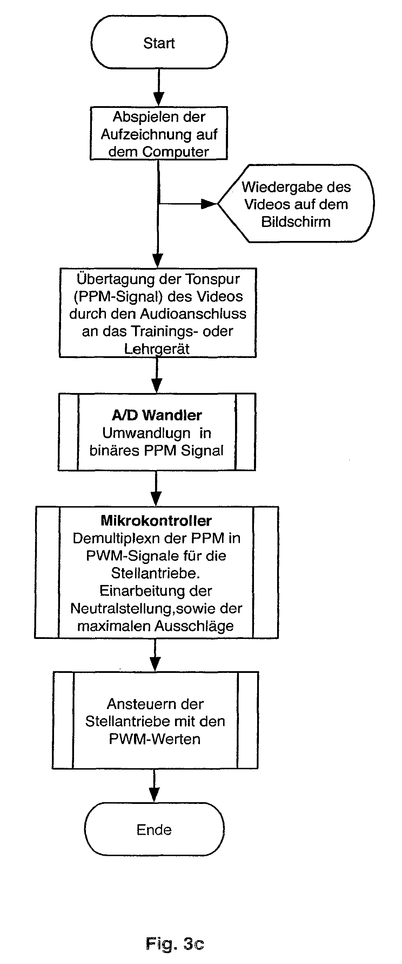

Der Ablauf der Wiedergabe des Videos zur Ausgabe der Steuerdaten zu Lehren der Steuerung der Flugbewegungen ist im Ablaufdiagramm der Fig. 3c dargestellt.

Nach dem Start erfolgt gemäß dem Ablaufdiagramm der Fig. 3c ein Abspielen der Aufzeichnungen der Containerdatei auf dem Computer 7. Dabei werden die Daten der Videodatei bzw. des Videos auf dem Bildschirm 8 dargestellt. Gleichzeitig erfolgt die Übertragung der Audiodatei und der in dieser enthaltenen Steuer- oder Stelldaten (als PPM-Signal) des Mediencontainers über den Audioanschluss des Computers 7 an das Trainings- oder Lehrgerät 11 und zwar über den A/D-Wandler 9, wobei eine Umwandlung in ein binäres PPM-Signal erfolgt, und den Mikrocontroller 10, in den das PPM-Signal in PWM-Signale für die einzelnen Stellantriebe de-multiplext wird, wobei Neutralstellung sowie maximale Ausschläge mit eingearbeitet werden. Anschließend werden die Stellantriebe 11.1 der Steuerstifte 1.1 mittels der PWM-Signale angesteuert.

In alternativer Weise kann eine Volldigitalisierung der Datei nach der Aufnahme und Speicherung auf dem Rechner in einer voll digitalisierten Containerdatei, einen MedienContainer vorgesehen sein. Eine solche Containerdatei enthält üblicherweise mindestens eine Kopf-Datei, eine die Bildinformationen enthaltende Videodatei und mindestens eine die Ton- oder Audioinformationen enthaltende Audiodatei. Die Kopfdatei dient zur Steuerung und der Synchronisation des Ablaufs von Bildern und zugehörigem Ton.

Daher können die als Ton- oder Audiodaten aufgezeichneten Steuerdaten separat binär digitalisiert und als separate-- zusätzliche - digitale Steuerdatei zu den Bilddaten einer Videodatei in der Containerdatei oder einem Mediencontainer abgespeichert werden. Dabei werden Synchronisationspunkte (Timestamp) in der Kopfdatei des Mediencontainers vorgesehen. Aufgrund der Position der Bilddatei bei der Wiedergabe können die Steuerbewegungen aus der digitalen Steuerdatei synchron ausgelesen werden. In dem Mediencontainer können zusätzlich die bei der Aufnahme erfassten Maximal- und Neutralwerte der Steuersignale in einer Parameterdatei des Mediencontainers mit abgespeichert werden. Ein Mediencontainer kann weiter - in an sich üblicher Weise - Text-Audiodateien enthalten, in denen Steuerbewegungen in jeweils verschiedenen Sprachen erklärt werden.

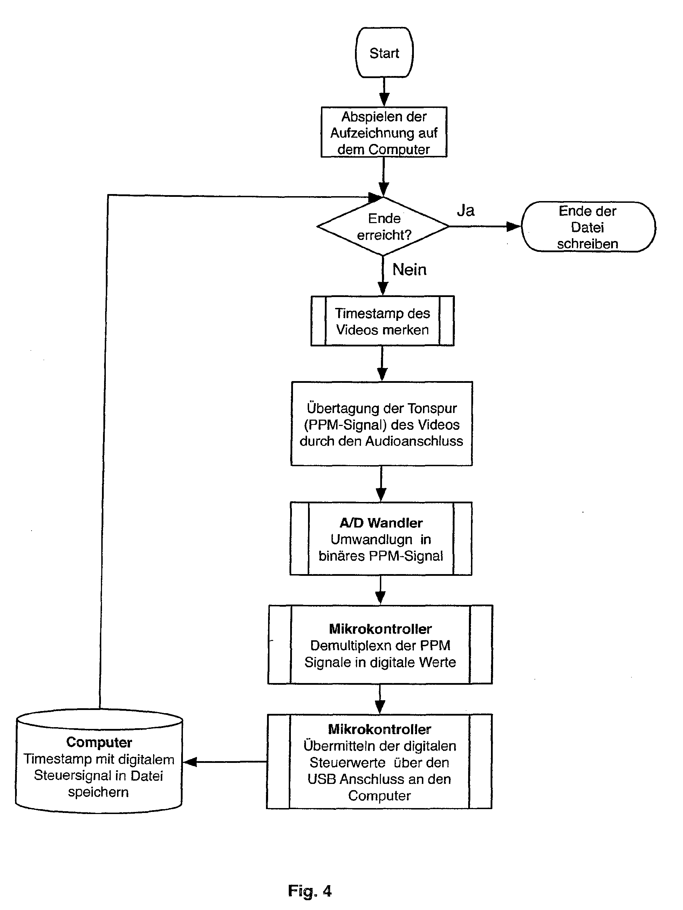

Das Erstellen einer Containerdatei oder eines Mediencontainers geschieht in der in der Fig. 4 dargestellten Weise. Nach dem Starten folgt ein Abspielen der Aufzeichnung auf den Computer 7, wobei Timestamps des Videos vermerkt werden und die Tonspur als PPM-Signal über den Audioanschluss an einen Decodierer sowie A/D-Wandler 9 zum Umwandeln in ein binäres PPM-Signal übertragen wird. In dem Mikrocontroller 10 erfolgt ein De-Multiplexen der PPM-Signale in binäre digitale Werte. Anschließend übermittelt der der Mikrocontroller 10 die digitalen Steuerwerte über den USB-Anschluss zur Abspeicherung in einer Datei zusammen mit den entsprechenden Zeitmarkierungen (Timestamps)

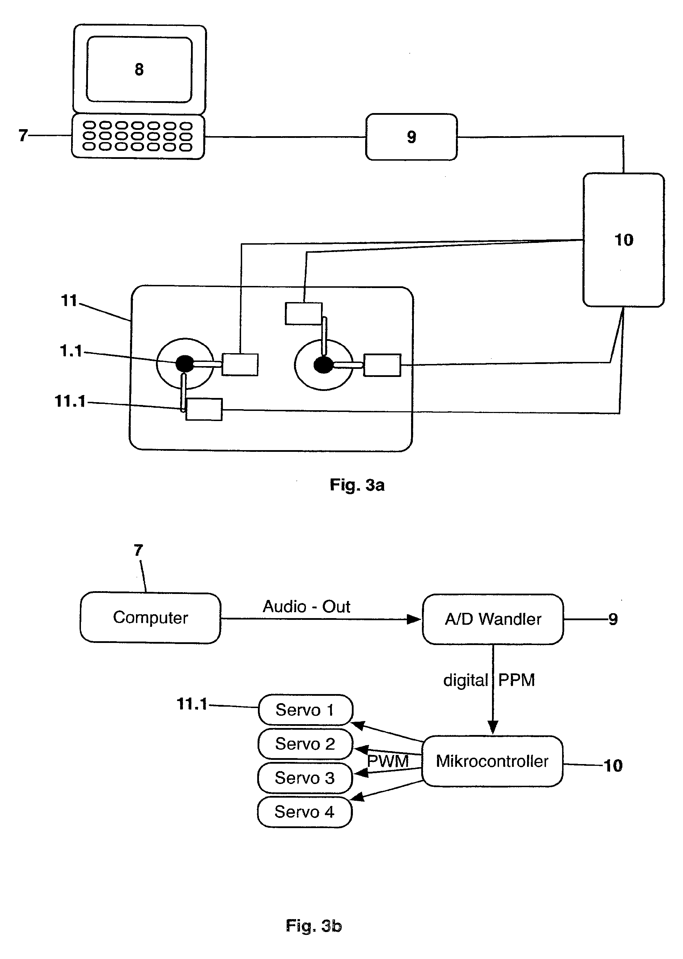

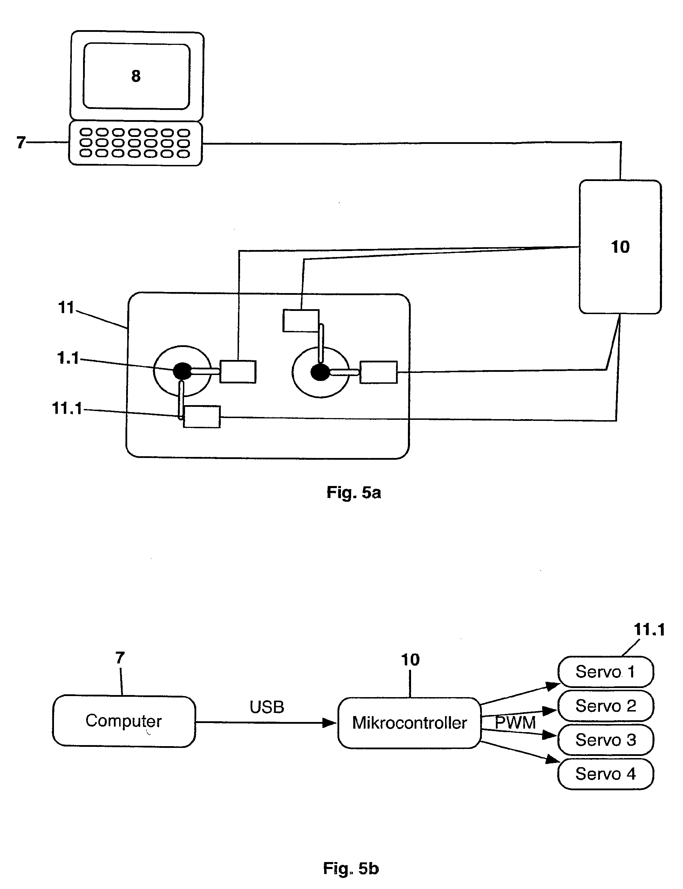

Wenn daher in dieser alternativen Ausgestaltung die Steuerdaten nicht in der "Tonspur" der Videodatei abgelegt sind, sondern in der oben beschriebenen Weise schon bereits digitalisiert wurden und als die digitale Steuerdatei in einer Containerdatei zusammen mit der Videodatei abgespeichert wurden, so können die entsprechenden Steuerdaten unmittelbar vom Rechner 7 über eine USB-Schnittstelle desselben ohne Zwischenschaltung eines A/D-Wandlers an den einen Splitter aufweisenden Mikrocontroller 10 und in der schon vorstehend beschriebenen Weise weiter auf das Lehrgerät 11 und die dortigen Stellmotoren 11.1 und über diese an die Bedienungselemente 1.1 übertragen werden, wie dies in den Fig. 5a und 5b dargestellt ist, die den Fig. 3a, 3b entsprechen und lediglich nicht den nicht mehr notwendigen A/D-Wandler aufweisen, da noch digitalisierte Daten vorliegen.

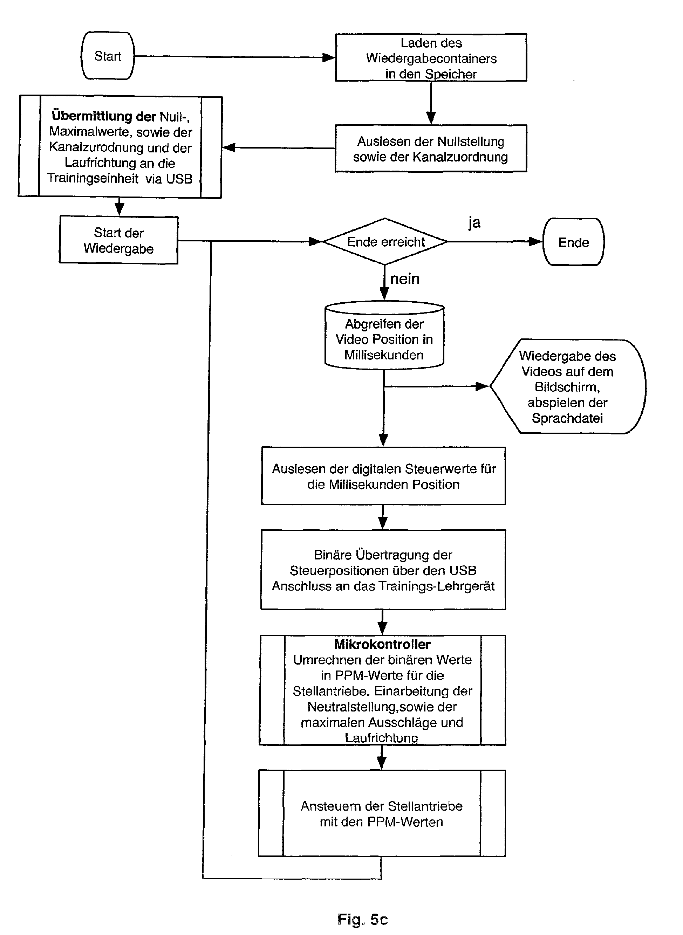

Zur Wiedergabe des Videos und Übertragung der in der Steuerdatei des Mediencontainers enthaltenen Steuerdaten an das Lehrgerät 11 erfolgt nach dem Start gemäß dem Ablaufdiagramm der Fig. 5c nach dem Starten zunächst ein Laden des Mediencontainers aus dem einem Permanentspeicher des Computers (CD-Rom, Festplatte etc.) in den flüchtigen Speicher desselben und anschließen ein Auslesen der Nullstellung sowie der Kanalzuordnung. Im Weiteren werden die Nullwerte und die Kanalzuordnung an die Trainingseinheit beispielsweise über eine USB-Schnittstelle übertragen. Es erfolgt der Start der Wiedergabe des Videos. Dabei wird entsprechend der Zeitmarkierung (Timestamp) des Videos die jeweilige Video-Position in Mittelkanälen abgegriffen. Es erfolgt die Wiedergabe des Videos auf dem Bildschirm, wobei gleichzeitig aus den Audio- oder Tondateien sprachliche Erklärungen zu den entsprechenden Steuerbefehlen ausgegeben werden können. Parallel hierzu werden die digitalen Steuerwerte aus der Steuerdatei des Mediencontainers für die entsprechende Millisekundenposition ausgelesen und binär über einen USB-Anschluss an das Trainings-Lehrgerät übertragen. Dessen Mikrocontroller wandelt die erhaltenden binären Steuerwerte in PWM-Werte für die Stellantriebe um. Neutralstellungen sowie maximale Ausschläge werden eingearbeitet und es folgt dann synchron mit der Wiedergabe des Videos ein Ansteuern der Stellantriebe mittels der entsprechenden PWM-Werte.

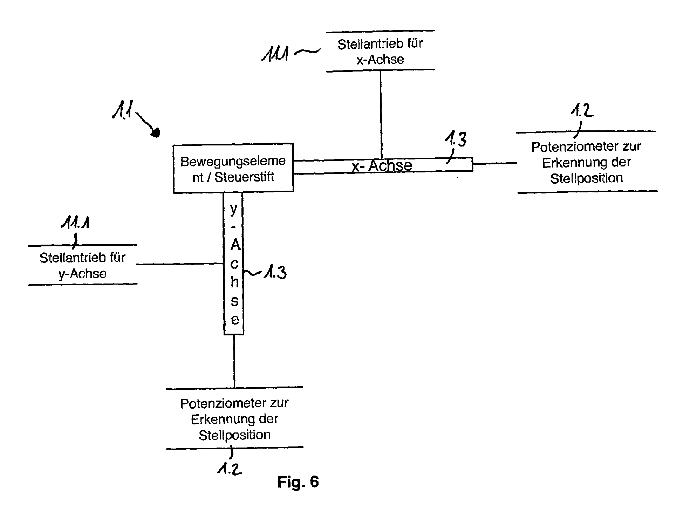

In der Fig. 6 ist ein Blockschaltbild die wesentlichen Elemente eines Steuerstifts eines Trainings- oder Lehrgeräts 11 (Fig. 3a) dargestellt. Der Steuerstift ist im dargestellten Ausführungsbeispiel entsprechend zweier senkrechter Achsen, X- und Y-Achse, beweggbar, wobei auch kombinierte Bewegungen mit Komponenten sowohl von X- und Y-Achse möglich sind. An entsprechenden Achsen sind zunächst, wie dies bei einem üblichen Steuergerät der Fall ist, Detektoren in Form von Potenziometern 1.2 oder auch Hallsensoren auf die jeweiligen Bewegungen des Steuerstifts über jeweils eine Welle übertragen werden. Aufgrund des am Potenziometer in üblicherweise abfallenden und abgreifbaren elektrischen Widerstands kann so die Stellposition des Steuerstifts 1.1 erkannt werden.

Weiterhin sind dem Steuerstift 1.1 Stellantriebe 11.1 (Fig. 3a) für die Bewegung in den beiden Achsen zugeordnet, die gekoppelt über Antriebselemente, wie Zahnrad, Riemen oder Umlenkungen auf die Achsen des Bewegungselements bzw. Steuerstifts 1.1 übertragen werden können, so dass dieser damit über die Stellantriebe 11.1 aktiv angesteuert werden kann. Die Kopplung zwischen Stellantrieb 11.1 und jeweiliger Welle 1.3 des Steuerstifts 1.1 kann entkoppelt werden. Derart kann ein Steuerstift 1.1 der in der Fig. 5a dargestellten Ausgestaltung der sowohl mit Potenziometern (oder Hallsensoren) als auch mit Stellantrieben gekoppelt bzw. koppelbar ist sowohl in einem Steuergerät für eine Fernsteuerung eines Lehrgeräts 2 als auch einem Lehr- oder Trainingsgerät zum Lehren eines Benutzers zum Steuern eines solchen Modellgeräts durch Erfassen der von den Stellantrieben bei der erfindungsgemäßen erfolgten Wiedergabe eines Lehrvideos gegebenen Bewegung der Steuerstifte eingesetzt werden kann.

### Bezugszeichenliste

- 1: Steuergerät
- 1.1: Bedienungselemente
- 2: Modellgerät
- 3: Empfänger
- 4: Multiplexer
- 5: Videokamera
- 6: Spannungsregulator
- 7: Rechner, Computer
- 8: Bildschirm
- 9: A/D-Wandler
- 10: Mikrocontroller
- 11: Trainings- oder Lehrgerät
- 11.1: Stellantriebe
- 20.1, 20.2: Vergleicher
- 20.3: Flip-Flop
- 20.4: Eingang

## Patentansprüche

1. Verfahren zum Lehren des Steuerns eines fernsteuerbaren Modellgeräts (RC-Modell), wie eines Modellfluggeräts, mittels eines mindestens ein Bedienungselement (1.1), aufweisenden Lehrgeräts, wobei
- Steuerbefehle zur Steuerung der Bewegung des Modellgeräts (2) von dem Lehrgerät (11) empfangen werden und an Aktoren (Stellglieder 11.1) für mindestens ein Bedienungselement (1.1) eines Lehrgeräts (11) eines Lernenden übertragen werden,
- die Aktoren (Stellglieder 11.1) das mindestens eine Bedienungselement (1.1) des Lehrgeräts (11) bewegen und
- eine der Bewegung der des mindestens einen Bedienungselements (1.1) zugeordneten Bewegung des Modellgeräts (2) visuell gezeigt wird.

2. Verfahren nach Anspruch 1, **dadurch gekennzeichnet, dass** die Bewegung des Modellgeräts (2) auf einem Bildschirm wiedergegeben wird.

3. Verfahren nach Anspruch 1 oder 2, **dadurch gekennzeichnet, dass** die Steuerbefehle zur Steuerung der Bewegung des Modellgeräts (2) und einem Rechner (7) aus einem Speicher des Rechners abgerufen und an das Lehrgerät (11) übertragen werden.

4. Verfahren nach einem der Ansprüche 1 bis 3, **dadurch gekennzeichnet, dass** die Steuerbefehle mit zugehörigen Bild- oder Videodaten der Bewegungen des Modellgeräts synchronisiert werden, die den Steuerdaten entsprechen, so dass eine die Videoaufnahme der Bewegung des Modellgeräts (2) gleichzeitig mit Ansteuerung der Aktoren (11.1) des mindestens einen Bedienungselements (1.1) auf einem Bildschirm (8) wiedergegeben werden.

5. Verfahren nach einem der Ansprüche 1 bis 4, **dadurch gekennzeichnet, dass** aus einer Datei, eines Rechners (7) die Bewegungen des Modellgeräts (2) zeigende Videodaten zu einem Bildschirm (8) und synchron mit diesen aus der gleichen Datei Steuerdaten zum Steuergerät (11) übertragen werden.

6. Verfahren nach Anspruch 5, **dadurch gekennzeichnet, dass** die Steuerdaten aus einer Audiodatei einer neben dieser eine Bilddatei enthaltenen Ablaufdatei vom Audioausgang eines Rechners (7) über einen A/D-wandler (9) zum Lehrgerät (11) übertragen werden.

7. Verfahren nach Anspruch 3, **dadurch gekennzeichnet, dass** die Steuerdaten als digitale Steuerdaten aus einer Bild- und Steuerdaten enthaltenden Containerdatei von einem Rechner (7) an das Lehrgerät (11) übertragen werden, wobei die Übertragung insbesondere über USB-Schnittstellen erfolgt.

8. Verfahren nach einem der vorangehenden Ansprüche, **dadurch gekennzeichnet, dass** als gemultiplextes PPM-Summensignal vorliegende Steuersignale zur Übertragung auf das Lehrgerät (11) zu PWM-Signalen de-multiplext werden.

9. Verfahren nach einem der vorangehenden Ansprüche, **dadurch gekennzeichnet, dass** vorab Bewegungen eines durch ein Steuergerät (1) gesteuerten Modellgeräts (2) mittels einer Videokamera (5) aufgenommen werden und gleichzeitig die Bewegung des Modellgeräts (2) bewirkende Steuersignale über den Audioeingang der Videokamera (5) synchron mit den aufgenommenen Videodaten aufgenommen werden.

10. Verfahren nach Anspruch 9, **dadurch gekennzeichnet, dass** die bei der Steuerung eines Modellgeräts (2) durch ein Steuergerät (1) ausgesendete Steuerbefehle über einen Multiplexer (4) als PPM-Summensignal gemultiplext der Videokamera zugeführt werden, wobei insbesondere das PPM-Summensignal zur Übertragung auf den Audioeingang der Videokamera (5) spannungsreduziert wird, wie von ca. 5,4 Volt auf 3,3 Volt.

11. Verfahren nach Anspruch 9 oder 10, **dadurch gekennzeichnet, dass** Neutralstellung und Maximalausschläge der Steuerbefehle als Neutralsignal und Maximalsignale erfasst werden.

12. Verfahren nach einem der Ansprüche 8 bis 11, **dadurch gekennzeichnet, dass** aus ein oder mehreren Videoaufnahmen in üblicher Schnitttechnik ein oder mehrere Lehrvideos erstellt werden.

13. Verfahren nach einem der Ansprüche 9 bis 12, **dadurch gekennzeichnet, dass** als Audiodatei vorliegende Steuerdaten separat binär digitalisiert, Videodaten und zugehörende Steuerdaten mit Synchronisationspunkten (Timestamp) versehen werden und gemeinsam als Videodatei und Steuerdatei in einer Containerdatei abgespeichert werden, wobei insbesondere in der Containerdatei auch Neutral- und Maximalwerte abgespeichert werden, wie in einer Parameterdatei.

14. Vorrichtung zum Lehren des Steuerns eines fernsteuerbaren Modellgeräts (RC-Modell) mit mindestens einem beweglichen Bedienungselement (1.1), vorzugsweise als angreifbarer Stift, das mit jeweils mindestens einem Aktoren (11.1) versehen ist, der durch Steuerbefehle zur Steuerung des Modellgeräts (2) ebenfalls gleichzeitig zur Ansteuerung von Bewegungen des Bedienungselements (1.1) ansteuerbar ist, wobei die Bewegungen des Bedienungselements (1.1) identisch denen sind, die zur entsprechenden Steuerung des Modellgeräts (2) von Hand am Bedienungselement (1.1) eines Steuergeräts (1) für das Modellgerät (2) auszuführen sind.

15. Vorrichtung nach Anspruch 14, **gekennzeichnet durch** einen Speicher zum Speichern der Steuerbefehle in Form einer Steuerdatei und zum Abrufen der Steuerbefehle und zur Ansteuerung des mindestens einen Bedienungselements (1.1) und weiterhin insbesondere **durch** einen Bildschirm (8) zur mit den entsprechenden **durch** die Steuerbefehle bewirkten Bewegungen des mindestens einen Bedienungselements (1) synchroner Anzeige zugehöriger Bewegungen des Modellgeräts (2) auf dem Bildschirm (8).

16. Vorrichtung nach Anspruch 15, **gekennzeichnet durch** ein Steuergerät (1) für ein Modellgerät (2), das zusätzlich zu einem mindestens einem Bedienungselement (1.1) zugeordneten Bewegungssensor zum Abnehmen der Bewegungen des mindestens einen Bedienungselements (1.1) und Umsetzen der Bewegungen in elektrische Steuersignale auch Aktoren (11.1) zum automatischen Bewegen des mindestens einen Bedienungselements (1.1) aufgrund von Steuersignalen aufweist.
